# FASCICULE DE BREVET EUROPEEN

(11) **EP 4 519 726 B1**
(45) Date de publication et mention de la délivrance du brevet: **15.04.2026**
(21) Numéro de dépôt: 23724263.1
(22) Date de dépôt: 03.05.2023
(51) Int. Cl.: G02B 6/26, G02B 1/00

(54) **PROCÉDÉ DE RÉALISATION EN EXTRÉMITÉ D'UNE STRUCTURE D'UN MICRO OU NANO-COMPOSANT EN MATÉRIAU VITREUX RÉALISÉ PAR PHOTOPOLYMÉRISATION À PLUSIEURS PHOTONS**
VERFAHREN ZUR HERSTELLUNG EINES MIKRO- ODER NANO-BAUTEILS AUS GLASARTIGEM MATERIAL AM ENDE EINER STRUKTUR DURCH PHOTOPOLYMERISATION MIT MEHREREN PHOTONEN
PROCESS FOR PRODUCING, AT THE END OF A STRUCTURE, A MICRO- OR NANO-COMPONENT MADE OF VITREOUS MATERIAL PRODUCED BY MULTI-PHOTON PHOTOPOLYMERIZATION

(30) Priorité: 06.05.2022 FR 2204326
(43) Date de publication de la demande: 12.03.2025
(73) Titulaire: Commissariat à l'Energie Atomique et aux Energies Alternatives, 75015 Paris (FR); Centre National de la Recherche Scientifique, 75794 Paris Cedex 16 (FR); SAFRAN AIRCRAFT ENGINES, 75015 Paris (FR); Université de Lille, 59800 Lille (FR)
(72) Inventeur: LAFFONT, Guillaume, 91191 Gif sur Yvette (FR); DOUAY, Marc, 59658 Villeneuve D'Ascq (FR); POHL, Didier, 77550 Moissy-Cramayel (FR)
(74) Mandataire: Santarelli
(86) Numéro de dépôt international: PCT/EP2023/061620
(87) Numéro de publication internationale: WO 2023/213849

(56) Documents cités:
- WO-A1-2017/059960
- WO-A1-2022/035994

## Description

### DOMAINE TECHNIQUE

La présente demande concerne le domaine de la photonique et des dispositifs optiques et en particulier la réalisation d'un dispositif formé d'un composant optique et/ou photonique, réalisé par fabrication additive et ayant des motifs de faible dimension, en particulier micrométriques voire nanométriques, que l'on dispose en extrémité ou sur une région latérale d'une structure de type guide d'onde, en particulier une fibre optique ou bien d'une carte électronique ou d'un circuit photonique.

### ÉTAT DE LA TECHNIQUE ANTÉRIEURE

Dans le domaine de la photonique et des dispositifs optiques, de nouveaux procédés d'impression 3D, ou de fabrication additive sont apparus afin de réaliser des composants optiques avec des motifs de faibles dimensions.

Le document « Three-dimensional printing of transparent fused silica glass », de Kotz et al., Nature, vol. 544, 2017 présente par exemple une méthode permettant de créer des structures optiques dotées de motifs de taille de plusieurs dizaines de micromètres, à partir d'une poudre de silice mise en suspension au sein d'une résine capable de polymériser sous l'action d'un rayonnement lumineux.

On insole un tel matériau à l'aide d'un procédé dit de stéréo-lithographie mettant en œuvre une source de lumière laser dont la longueur d'onde est partiellement absorbée par ce matériau. Une illumination structurée permet de déclencher la polymérisation du matériau dans des zones spécifiques. Afin d'obtenir une structure à base de silice, le procédé consiste ensuite à effectuer un recuit à haute température de la structure afin d'éliminer toute trace organique et ainsi ne plus conserver qu'un verre de silice. Avec un tel procédé, la résolution des motifs est limitée.

Un procédé dit « de polymérisation à deux photons » est apparu et permet de fabriquer des micro-structures ou nano-structures avec une grande résolution, typiquement inférieure au micromètre et qui peut être de l'ordre d'une centaine de nanomètres. La polymérisation à deux photons en tant que technique d'écriture laser directe permet de créer des structures tridimensionnelles (3D). Cette technique repose sur l'utilisation de lasers dits « femtosecondes » ou « picosecondes » fournissant des impulsions laser de l'ordre de quelques femtosecondes à plusieurs picosecondes, en particulier à plusieurs centaines de pico-secondes. La polymérisation à deux photons utilise un processus optique basé sur l'absorption simultanée de deux photons dans un matériau photosensible ou bien dans un matériau auquel on a rajouté un photoinitiateur. Lorsqu'il est exposé au laser, le matériau est modifié en activant des photo-initiateurs, ce qui va provoquer la formation de radicaux libres. Ces radicaux libres vont activer les unités monomériques et ainsi déclencher localement la réaction de polymérisation sous l'action d'un activateur constitué ici de la lumière laser. Dans le cas de la polymérisation à deux photons, la réaction de photo-polymérisation du matériau se produit au sein du volume focal où se concentre l'énergie lumineuse associée à chaque impulsion lumineuse issue du laser. Le balayage de cette zone focale au sein du volume du matériau permet la création d'une structure tri-dimensionnelle Dans une étape ultérieure du procédé, le matériau non polymérisé peut être éliminé par dilution dans un solvant.

Par ailleurs, l'assemblage ou ancrage d'un composant microstructuré ou nanostructuré en polymère sur un support ou un composant optique ou encore en extrémité d'une fibre optique pose problème.

Ainsi, le document « Optical fiber tip with integrated Mach-Zehnder interferometer for sensor applications », de Gaso et al., Advances in electrical and electronic engineering, vol. 17, 2019 présente par exemple la réalisation d'un composant doté d'une structure interférométrique de type Mach-Zehnder dont les motifs sont réalisés en un matériau polymère. Pour être disposé sur la fibre, le composant est ici emmanché sur une extrémité de la fibre. La liaison entre la fibre et le composant n'est donc pas solide : seuls les frottements entre les deux structures assurent le maintien de la structure imprimée en 3D avec la fibre optique. Par ailleurs, une structure en polymère est moins stable thermiquement et présente une moins bonne transmission optique qu'une structure en verre, par exemple de silice.

On sait transposer l'utilisation du procédé de polymérisation à 2 photons à des systèmes en verre. Ainsi, le document de Kotz et al., « Two-photon polymerization on nanocomposites for the fabrication of transparent fused silica glass microstructures », Adv. Material 2021 prévoit un procédé de polymérisation à deux photons d'un matériau organique chargé en particules de silice pour former une structure tridimensionnelle. Le matériau une fois exposé au laser est traité thermiquement pour éliminer la partie organique et ainsi réaliser un frittage. Ce frittage est réalisé à une température élevée supérieure à 1000°C. On obtient au final une structure en silice. Toutefois, le traitement thermique permettant d'éliminer la partie organique provoque une modification des dimensions de cette structure appelée « rétreint » avec un facteur de réduction qui peut être de l'ordre de 30%. Un tel rétreint peut donc entrainer une difficulté de positionnement précis du composant obtenu en impression 3D en extrémité d'une fibre optique. Il faut en effet s'assurer que la structure imprimée en 3D reste alignée avec le cœur optique assurant le guidage de la lumière au sein de la fibre optique, et grâce au lequel le microcomposant peut être caractérisé. Ce retreint induit également des déformations à l'interface support-composant modifiant la microstructure réalisée et donc les propriétés optiques. Ce retreint induit également des contraintes importantes a l'interface support composant ayant pour conséquence un « décrochement » du composant de son support.

Pour résoudre ce problème d'accroche on peut envisager d'introduire une ou plusieurs couches d'accroche entre la fibre et la structure 3D, par exemple via la formation de silanes. Toutefois, cette approche peut s'avérer insuffisamment robuste en vue d'une utilisation dans certains types d'environnements en particulier à haute température (supérieure à 600°C), ou dans des milieux dans lesquels des radiations et/ou des vibrations importantes sont présentes.

Il se pose ainsi le problème de trouver un nouveau procédé permettant de réaliser un assemblage d'un composant optique et/ou photonique micro-structuré ou nano-structuré imprimé par polymérisation à plusieurs photons, en particulier à deux photons sur une structure telle qu'un guide d'onde et en particulier une fibre optique et qui soit amélioré vis-à-vis d'inconvénients énoncés ci-dessus.

L'art antérieur est divulgué dans la publication WO 2017/059960 A1.

### EXPOSÉ DE L'INVENTION

Un mode de réalisation de la présente invention concerne un procédé de réalisation d'un dispositif optique muni d'un composant nano-structuré ou micro-structuré assemblé sur une extrémité ou une surface latérale d'une structure, le procédé comprenant des étapes consistant à :
- prévoir un support à base d'un premier matériau, photosensible et transformable en matériau vitreux, et réaliser sur une première extrémité dudit support, par photo-polymérisation à plusieurs photons, en particulier à deux photons, un composant micro-structuré ou nano-structuré, à base d'un deuxième matériau photosensible et transformable en matériau vitreux,
- effectuer un ou plusieurs traitements thermiques de sorte à transformer le premier matériau dudit support et le deuxième matériau dudit composant micro- ou nano-structuré en matériau vitreux puis,
- assembler et solidariser, une région d'une deuxième extrémité dudit support opposée à ladite première extrémité avec une zone d'une extrémité ou d'une surface latérale de ladite structure.

La structure sur laquelle le composant nano-structuré ou micro-structuré est assemblé peut être une fibre optique ou plus généralement un guide d'onde optique. Typiquement, le support et la fibre sont assemblés par soudage. Ce soudage peut être réalisé par un procédé de fusion des matériaux utilisant un arc électrique ou bien à l'aide d'un procédé de fusion par laser.

Se servir d'un support intermédiaire encore appelé piédestal ou support piédestal pour pouvoir assembler le composant avec une fibre ou un guide d'onde optique permet de protéger ce composant lors de cet assemblage où l'on réalise une fusion localisée.

Le fait d'assembler par fusion localisée un support en matériau vitreux et une fibre typiquement également en un matériau vitreux et typiquement en silice permet également d'obtenir un assemblage solide.

Le fait de prévoir le ou les recuits thermiques avant l'assemblage entre fibre et support permet de favoriser un positionnement précis du support par rapport à la fibre dans la mesure où l'on évite dans ce cas un rétreint thermique post assemblage, un tel rétreint pouvant être source de désalignement en particulier en cas de rétreint non homogène. Avantageusement, le procédé peut comprendre en outre : une étape de formation d'au moins un guide d'onde dans un volume dudit support.

Selon une possibilité de mise en œuvre du procédé, le ou les guides d'ondes peut ou peuvent être réalisé(s) en formant des galeries dans le support, ces galeries étant alors typiquement formées lors d'une réalisation par fabrication additive dudit support.

Selon une possibilité de mise en œuvre du procédé, le ou les guides d'ondes peut ou peuvent être formés après réalisation dudit composant sur ledit support et préalablement auxdits un ou plusieurs traitements thermiques.

En variante, on peut prévoir de réaliser le ou les guides d'ondes après assemblage et solidarisation de ladite région dudit support et de ladite zone de ladite structure.

Selon une possibilité de mise en œuvre du procédé, le ou les guides d'onde peut ou peuvent être réalisés par écriture directe au moyen d'un laser dans un volume dudit support.

Une mise en œuvre particulière prévoit la réalisation de plusieurs guides d'ondes dans ledit support.

Avantageusement, le support peut être réalisé par photo-polymérisation à plusieurs photons, en particulier à deux photons. Ainsi, on peut former le support et le composant lors d'une même étape ou tout au moins au moyen d'un même équipement.

Le composant micro-structuré ou nano-structuré est typiquement un composant optique ou photonique, ou un capteur doté d'un composant optique ou photonique. Ce composant optique ou photonique peut être choisi en particulier parmi les composants suivants : un interféromètre, une lentille ou un réseau de lentilles, un ensemble de lentilles de Fresnel, une structure diffractive, un réseau de diffraction, un élément d'optique diffractive, un adaptateur de mode, un combineur de cœur de fibre, une cavité résonnante pour les ondes optiques ou acoustiques..

Avantageusement, le matériau dudit support et/ou le matériau dudit composant est :
- un composé polymère chargé en particules de matériau vitreux telles que des particules de silice, ou
- un matériau sol-gel.

Selon un autre aspect, un mode de réalisation de la présente invention prévoit un dispositif optique muni d'un composant nano-structuré ou micro-structuré assemblé sur une extrémité d'une fibre optique, par l'intermédiaire d'un support en matériau vitreux sur lequel le composant nano-structuré ou micro-structuré est agencé, le support étant soudé à une zone de ladite fibre optique et comportant un guide d'onde qui s'étend entre ledit composant et la fibre optique.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
Les figures 1 et 2 servent à illustrer une étape de formation par fabrication additive d'un support piédestal en un matériau photosensible et transformable en matériau vitreux ;
La figure 3 sert à illustrer une étape de formation d'un composant micro- ou nano-structuré en extrémité du support piédestal, le composant étant également en un matériau photosensible et transformable en matériau vitreux ;
La figure 4 sert à illustrer une étape de formation d'un guide d'onde dans le volume du support piédestal et allant d'une extrémité à une autre extrémité sur laquelle se situe ledit composant ;
Les figures 5A et 5B servent à illustrer une étape de traitement thermique pour transformer le matériau du support piédestal et du composant en matériau vitreux et conduisant typiquement à une réduction de leurs dimensions ;
La figure 6 sert à illustrer une étape d'assemblage du support piédestal muni du composant avec une zone d'extrémité d'une fibre optique ;
Les figures 7, 8 et 9 servent à illustrer une réalisation d'un guide d'onde dans un support piédestal après traitement thermique visant à transformer le matériau de ce support en matériau vitreux ;
Les figures 10 et 11 servent à illustrer une réalisation d'un guide d'onde dans un support piédestal après un assemblage de ce support avec une fibre optique ;
La figure 12 sert à illustrer une étape de formation d'un support piédestal par fabrication additive, le support étant muni de galeries creuses délimitant un guide d'onde ;
La figure 13 sert à illustrer un support piédestal doté traversé par plusieurs guides d'ondes, chaque guide d'onde pouvant être associé à un composant ;
La figure 14 sert à illustrer un guide d'onde dans support piédestal, le guide d'onde ayant une géométrie courbe et débouchant dans une zone d'extrémité décentrée du support piédestal ;
La figure 15 sert à illustrer un guide d'onde d'un support piédestal ayant une géométrie courbe et débouchant dans une région latérale du support ;
La figure 16 sert à illustrer un support piédestal doté d'un composant et assemblé sur une région latérale d'une fibre optique ;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

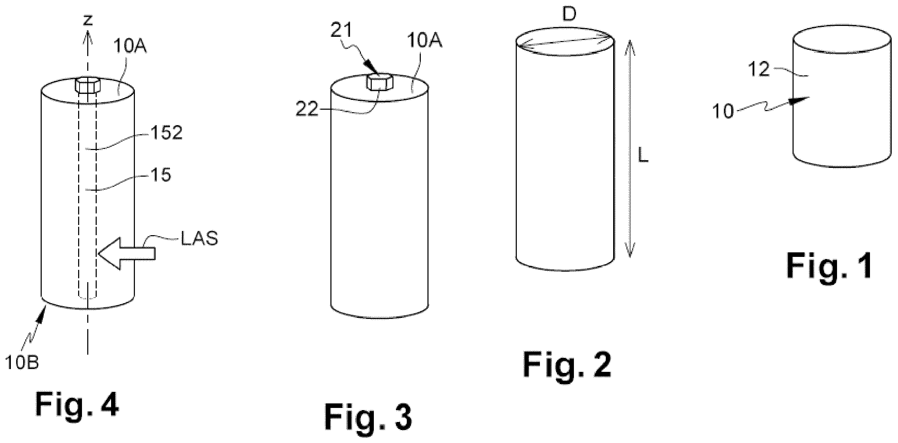

On se réfère à présent aux figures 1 et 2 servant à illustrer une étape de formation d'un support 10, également appelé « piédestal » destiné à accueillir un élément ou composant optique et/ou photonique, micro- ou nano-structuré.

Le support 10 a, dans l'exemple illustré, une forme de cylindre en particulier d'un cylindre de révolution avec une longueur L qui peut être comprise typiquement entre 0,1 et 10 mm, par exemple de l'ordre 1 mm et une largeur D (dans cet exemple correspondant au diamètre de sa base) qui peut être comprise entre 10 microns et plusieurs millimètres de diamètre. Cette dimension D peut elle-même dépendre du diamètre d'une fibre optique avec laquelle ce support est destiné à être assemblé ultérieurement et d'un facteur de rétrécissement également appelé « rétreint thermique » que le support 10 peut être amené à subir lors d'une étape ultérieure de traitement thermique visant à modifier sa composition. Le diamètre du support 10 est de préférence prévu de sorte qu'il soit contenu dans l'extrémité de la fibre optique avec laquelle il est assemblé. Le support 10 peut être à ce stade éventuellement prévu avec un diamètre plus élevé que celui de la fibre 30 et suffisamment pour lui permettre de s'ajuster à celui de la fibre 30 après rétreint thermique. La dimension D peut être par exemple comprise entre 100 et 400 µm, en particulier si l'on considère une fibre optique de diamètre externe de 80 µm ou 250 µm.

La forme géométrique du support 10 n'est pas limitée à l'exemple illustré et le support 10 peut éventuellement prendre d'autres formes que celles d'un cylindre, par exemple une forme parallélépipédique, ou celle d'un cylindre à base hexagonale. Le support 10 étant typiquement réalisé par fabrication additive, ses dimensions peuvent également dépendre du procédé de fabrication utilisé et en particulier de capacités de la machine d'impression utilisée pour réaliser cette fabrication.

Un support 10 piédestal de forme rétrécie d'une de ses extrémités à l'autre ou bien présentant une courbure peut être prévu.

Le procédé de fabrication additive est avantageusement un procédé de photo-polymérisation à plusieurs photons, en particulier à deux photons, mais d'autres techniques d'impression avec des résolutions moins élevées, par exemple une photo-polymérisation à un seul photon, peuvent être employées pour cette étape ou à trois photons ou par photo-polymérisation à plusieurs photons.

Lors de cette étape on peut utiliser par exemple une machine d'impression 3D du type de celle commercialisée par la société Nanoscribe sous le nom Photonic professional GT2^{®}. La longueur d'onde de travail du laser utilisé est adaptée par l'Homme du Métier en fonction du matériau du support 10 employé.

Le support 10 peut être ainsi formé partir d'un matériau 12, de type résine ou un polymère, transformable en matériau vitreux et en particulier chargé(e) en photo-initiateurs. Un composé polymère chargé en particules de matériau vitreux ou un matériau dit « sol-gel » permettant d'obtenir un matériau vitreux par procédé sol-gel peut être employé.

Dans le cas d'un matériau photosensible sous forme d'un composé polymère chargé en particules, ces particules de matériau vitreux, telles que des particules de silice (SiO₂), sont typiquement des nano-particules. Par « nano-particules » on entend des particules de dimension comprise entre 1 nm et 100 nm, et en particulier entre 10 nm et 50 nm.

Le matériau 12 du support peut être, selon un exemple de réalisation particulier, un matériau tel que décrit dans le document de Doualle et al., « 3D printing of silica glass through a multiphoton polymerization process », 2021 formé à partir d'un mélange de monomère de type HEMAhydroxyl-ethyl-methacrylate dans un solvant de phenoxyethanol (POE). Des nanoparticules de silice par exemple de plusieurs dizaines de nanomètres de diamètre, en particulier de l'ordre de 40 nm, sont dispersées dans cette préparation. Un photo-initiateur (2,2-dimethoxy-2-phenylacetophenone) est rajouté pour permettre de réaliser une polymérisation à deux photons.

Selon un autre exemple de réalisation particulier, on utilise comme matériau 12 précurseur un matériau tel que décrit dans l'article « Three-dimensional printing of transparent fused silica glass » de Frederik Kotz et al., publié dans le magazine Nature en 2017. Des particules de silice de faible diamètre sont dispersées au sein d'un monomère. Une insolation à l'aide d'un laser permet de déclencher une polymérisation lors de l'impression en trois dimensions du support 10.

Selon un autre exemple de réalisation, on utilise un matériau 12 tel que décrit dans l'article « Two-photon polymerization of nanocomposites for the fabrication of transparent fused silica glass microstructures » de Frederik Kotz et al., publié en mars 2021 dans le magazine « Two Advanced Materials ». Le matériau 12 est ici une résine fabriquée par la société Glassomer et chargée en nano-particules de silice dispersées au sein d'un monomère.

Selon une autre possibilité, un composé avec des particules de TiO₂/SiO₂ et tel que décrit par exemple dans le document « Microfabrication by two-photon lithography, and characterization, of SiO2/TiO2 based hybrid and ceramic microstructures » de Desponds et al., Journal of Sol-Gel Science and Technology volume 95, pages733-745 (2020) peut être utilisé.

Ainsi, le matériau employé peut être un polymère chargé avec d'autres types de particules de matériau vitreux que des particules de silice. On peut en particulier employer des nanoparticules de TiO₂ ou encore des nanoparticules d'alumine, voire des nanoparticules de silice dopées avec une terre rare, par exemple de l'Erbium, ou des nanoparticules de silice dopées au Germanium.

Selon une autre possibilité de mise en œuvre, un composé sol-gel incluant des précurseurs de type alkoxydes et permettant l'obtention de matériau vitreux par polymérisation et traitement thermique peut être employé. Un tel type de matériau est décrit par exemple dans le document « Sol-Gel Derived Optical and Photonic Materials », Woodhead Publishing Series in Electronic and Optical Materials, 2020, Pages 315-346. Un tel type de matériau apporte davantage de flexibilité pour obtenir un matériau vitreux dopé. Le matériau obtenu est alors typiquement plus homogène qu'avec un matériau comportant des nanoparticules de silice.

Dans le cas où l'on forme le support 10 par polymérisation à deux photons (TPP pour « Two Photons Polymerisation »), on utilise typiquement un laser pico ou femto seconde pour effectuer cette fabrication. Le laser peut avoir une longueur d'onde située dans l'infrarouge par exemple à 1030 nm, ou bien dans le proche infrarouge par exemple à 800 nm, ou bien dans le visible. Les impulsions laser peuvent être de durée l'ordre de plusieurs femtosecondes à 700 ps, typiquement entre plusieurs femtosecondes et plusieurs picosecondes.

Un doublage ou triplage de fréquence avec des longueurs d'ondes respectivement à 515 nm, 400 nm, 266 nm peut être également mis en œuvre. L'énergie du laser peut être prévue entre 1 nanoJoule et une dizaine de milliJoules. On peut également prévoir alternativement une série d'impulsions selon une fréquence par exemple de l'ordre de plusieurs dizaines de MHz ou bien une impulsion unique.

On fabrique ensuite (figure 3) sur une première extrémité 10A du support 10, un composant 21 micro-structuré ou nano-structuré. Par composant 21 « micro-structuré » on entend un élément 21 comportant des motifs en 3 dimensions et en particulier des motifs de dimensions minimales comprises typiquement entre 0,1 µm et 100 µm. Par composant 21 « nano-structuré », on entend que le composant 21 comporte des motifs en 3 dimensions et de dimensions minimales comprises typiquement entre 1 et 100 nanomètres. Le composant 21 réalisé peut être un composant optique ou photonique, par exemple un micro ou nano- interféromètre, en particulier un interféromètre de Fabry-Perot. D'autres structures, telles que par exemple, un miroir plan, concave ou convexe, une lentille, une lentille de Fresnel, un réseau de lentilles, ou un ensemble de lentilles de Fresnel, une structure diffractive, un réseau de diffraction, un élément d'optique diffractive ou un objectif de dispositif d'imagerie peuvent être également fabriquées, mais aussi une structure texturée pour exaltation d'effet Raman localisé, un adaptateur de mode ou un combineur pour les lasers à fibres notamment de haute puissance où la silice est un matériau indispensable.

Le composant optique ou photonique peut être amené à réaliser un capteur destiné à être disposé en bout d'une fibre optique et permettant d'effectuer des mesures de paramètres physiques tels que la pression, la température, une déformation, des ondes acoustiques ou bien de paramètres chimiques/biologiques tels que la concentration d'une espèce biochimique cible par exemple selon des réactions de type anticorps-antigène. Grâce au piédestal, le composant optique peut être rajouté sur un circuit micro-fluidique soit pour mettre en œuvre une analyse ou une détection optique ou bien pour effectuer un traitement optique par exemple sur des cellules qui passent dans des canaux micro fluidiques du circuit micro-fluidique.

Le composant 21 est ici de préférence réalisé par photo-polymérisation à plusieurs photons et en particulier à deux photons du fait de la résolution accessible par ce procédé. Le composant 21 peut être formé à partir d'un matériau 22 photosensible et transformable en matériau vitreux. Le matériau 22 peut être un composé polymère chargé en particules de matériau vitreux ou un matériau sol-gel, et en particulier tels que ceux évoqués précédemment pour le piédestal.

On peut éventuellement former le support 10 piédestal et le composant 21 micro-structuré ou nano-structuré à partir du même matériau. Le support 10 piédestal et le composant 21 micro-structuré ou nano-structuré peuvent être également réalisés par un même équipement, en particulier un même équipement de fabrication additive, par exemple un même équipement configuré pour réaliser une photo-polymérisation à plusieurs photons, en particulier une polymérisation à deux photons. Ainsi, de manière avantageuse, le support 10 et le composant 21 peuvent être réalisées en une même étape de photo-polymérisation à plusieurs ou à deux photons.

Dans ce cas, un changement d'objectif ou de lentille est typiquement réalisé en cours d'étape dans la mesure où les dimensions du composant 21 sont typiquement bien plus réduites que celles du support 10.

Dans l'exemple de réalisation particulier illustré sur la figure 4, après avoir formé le composant 21 on réalise ensuite au moins un guide d'onde 15 traversant le support 10 de l'extrémité 10A sur laquelle se situe le composant 21 jusqu'à une deuxième extrémité 10B du support opposée à la première extrémité.

On peut effectuer pour cela typiquement une exposition à un laser LAS d'un volume central 152 qui traverse longitudinalement ledit support 10. Cette exposition est mise en œuvre de sorte à modifier localement le matériau 12 du support et par exemple modifier l'indice de réfraction de ce volume central ou moduler localement son indice de réfraction en particulier de sorte à réaliser une alternance d'indice de réfraction par exemple pour former un réseau de Bragg. Un tel réseau peut servir par exemple pour mesurer une température, une pression, ou des déformations mécaniques.

Un laser peut être ici également utilisé pour effectuer cette étape. Typiquement, le rayonnement laser vient insoler radialement le support 10, autrement dit est dirigé dans une direction radiale par rapport à un axe z dans lequel support 10 s'étend.

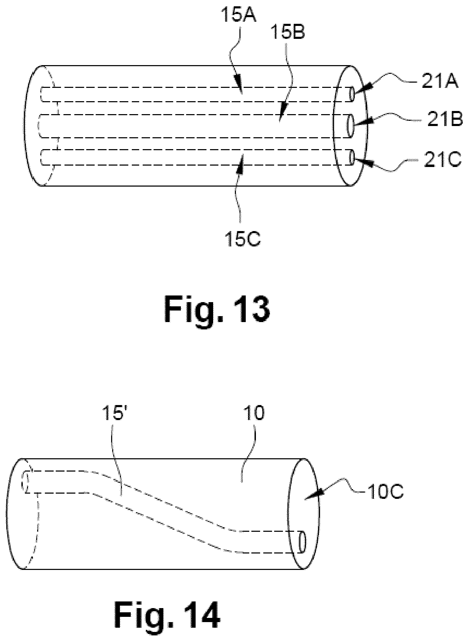

Dans l'exemple de réalisation illustré sur la figure 4, un seul guide d'onde 15 est réalisé mais on peut en variante, comme cela est illustré sur la figure 13, prévoir la réalisation de plusieurs guides d'onde 15A, 15B, 15C. Ce peut être le cas notamment lorsqu'on forme plusieurs composants micro- ou nano-structurées 21A, 21B, 21C en extrémité du support 10. Le laser utilisé pour former le ou les guide(s) d'ondes peut être un laser femto seconde ou pico seconde tel que décrit précédemment.

Le guide d'onde réalisé ne suit pas nécessairement une direction rectiligne et parallèle à l'axe longitudinal de la fibre optique.

Des guides d'onde créés avec des courbures peuvent être mis en œuvre.

Ainsi, on peut réaliser au moins un guide d'onde 15' ayant une forme courbe et débouchant comme dans l'exemple illustré sur la figure 14, de façon décentrée en extrémité 10A du support 10 piédestal.

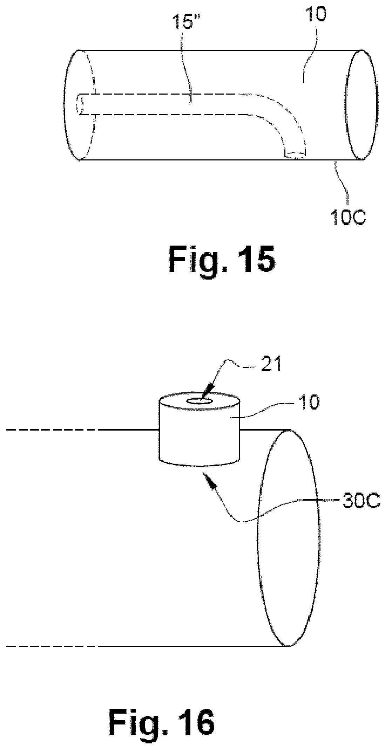

Dans un autre exemple de réalisation illustré sur la figure 15, le guide d'onde 15" est doté d'une extrémité débouchant sur une surface latérale 10C du support 10.

On effectue ensuite une ou plusieurs étapes de recuit(s) thermique(s) afin d'éliminer une partie organique du ou des matériaux 12, 22 constitutif du support 10 et du composant 21 et transformer ce support 10 et ce composant respectivement en un support et en un composant en matériaux vitreux. La ou les températures de recuit est ou sont typiquement comprise(s) entre 300°C et 1700°C, et dépend(ent) du matériau photosensible utilisé et en particulier de si il s'agit d'un polymère chargé ou d'un matériau sol-gel.

Dans le cas d'un matériau photosensible polymère chargé en particules, un ou plusieurs recuits sont effectués de sorte à réaliser une décomposition du ou des polymères ainsi qu'un frittage. Le recuit de frittage est dans ce cas réalisé à une température typiquement comprise entre 1000°C et 1500°C, typiquement entre 1100°C et 1400°C.

Le recuit peut être également opéré par séchage supercritique ce qui permet de réduire le temps de traitement ainsi que la température de recuit. Un tel type de recuit peut être employé par exemple dans le cas d'un matériau sol-gel.

Pour un séchage supercritique, la pression et la température du solvant dépassent les coordonnées d'un point critique C à une température critique Tc et une pression critique Pc. Des paramètres critiques Tc, Pc de solvant pour un séchage critique à basse température sont donnés à titre d'exemple dans le tableau ci-dessous.

**Tableau I-5 : Paramètres critiques de solvants pour séchage supercritique à basse température**

| Solvant | T_{C} (°C) | P_{C} (bar) |
|---|---|---|
| Dioxyde de carbone (CO₂) | 31,1 | 73,8 |
| Protoxyde d'azote (N₂O) | 36,5 | 72,4 |
| Fréon 13 (CClF₃) | 28,9 | 38,6 |
| Fréon 23 (CHF₃) | 25,9 | 48,2 |

Dans l'article « Two-photon polymerization of nanocomposites for the fabrication of transparent fused silica glass microstructures » précité, une température frittage de l'ordre de 1300°C est appliquée pendant 2h sous un vide de 0.05 mbar (5 Pa) pour le précurseur en question.

De manière générale la gamme de température du recuit dépend du matériau polymère utilisé. Lorsque ce polymère est chargé en particules de silice, on utilise de préférence des températures comprises entre 800°C et allant jusqu'à 1300-1500°C. D'autres verres nécessitent des températures de frittage plus basses et à partir de 300°C-400°C.

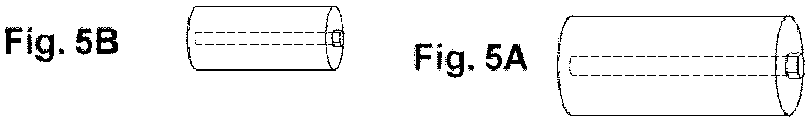

Comme indiqué précédemment, le ou les recuits thermiques et en particulier le recuit de frittage peuvent entrainer un rétrécissement encore appelé « rétreint thermique» de la structure comme illustré sur les figures 5A-5B, où l'on voit une réduction des dimensions respectives du support 10 et du composant 21 fixé sur ce support.

Une fois la composition du support 10 et du composant 21 modifiées, on peut réaliser ensuite un assemblage et une solidarisation de la structure formée par ce support 10 et ce composant 21 sur une fibre optique 30. La fibre optique 30, ou au moins son cœur 32, ou au moins une zone sur laquelle on souhaite fixer le support 10, est ici prévu(e) en un matériau vitreux, par exemple un verre de silice.

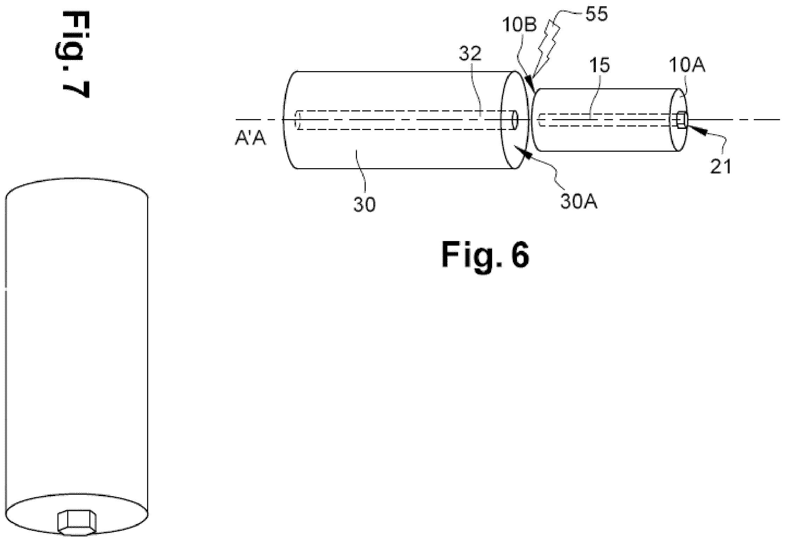

Dans l'exemple de réalisation illustré sur la figure 6, le support 10 est disposé sur une extrémité 30A de la fibre 30 et en particulier de sorte que le guide d'onde 15 créé dans le support 10 soit agencé dans le prolongement du cœur 32 de la fibre 30. Le cœur 32 et le guide 15 sont ainsi amenés à être agencés l'un contre l'autre sur un même axe A'A parallèle aux axes longitudinaux respectifs de la fibre 30 et du support 10. Préalablement à une solidarisation de la fibre 30 et du support 10, on aligne cette fibre optique 30 et le guide d'onde 15. On solidarise ensuite une région d'une extrémité 10B du support 10 opposée à celle 10A sur laquelle le composant 21 est formé à une zone d'extrémité 30A de la fibre optique 30. Pour effectuer cette solidarisation, on réalise une fusion localisée de cette région et de cette zone. Par exemple, un procédé de soudage tel qu'utilisé couramment afin de souder l'une à l'autre des fibres optiques en silice et mettant en œuvre un arc électrique 55 peut être employé.

L'assemblage entre le support 10 et la fibre 30 permet de lier solidement le composant 21 sur la fibre 30 tout en préservant ce composant 21 et en évitant de détériorer ses motifs qui peuvent être fragiles. En effet, ce n'est pas ici directement le composant 31 qui est mis en fusion et accolé à la fibre 30 mais le support 10 intermédiaire. L'assemblage entre le support 10 en matériau vitreux et la fibre 30 est ainsi plus solide que si l'on venait assembler sur cette fibre 30 un élément en matériau polymère. Par ailleurs, le fait de réaliser l'assemblage entre fibre 30 et support 10 alors que le ou les recuits thermiques ayant conduit à un rétreint thermique ont déjà été effectués et que ces deux éléments sont en matériau vitreux, permet d'obtenir un positionnement plus précis que si l'on venait réaliser le recuit de rétreint après assemblage avec la fibre. En effet, le support 10 et le composant 21 peuvent avoir subi un rétreint tandis que la fibre optique 30 n'en a quant à elle pas subi.

En variante d'une soudure par arc électrique, l'assemblage solidaire entre la fibre 30 et support 10 peut être effectué par insolation laser. Un laser CO₂ dont le faisceau est mis avantageusement sous la forme d'un anneau peut être par exemple utilisé. Plusieurs faisceaux laser permettant par exemple de chauffer la fibre de chaque côté peuvent être utilisés. L'emploi d'un laser pour cette étape permet un contrôle précis et localisé de l'échauffement appliqué aux régions que l'on souhaite mettre en fusion et lier entre elles. La puissance optique du laser peut être modulée selon l'étendue des zones traitées et/ou la quantité de matière à faire fondre, une plus faible puissance pouvant être employée lorsque les zones à lier ont une étendue réduite tandis que pour un support 10 dont l'extrémité est prévue avec des dimensions correspondant à celles de la fibre optique 30 une puissance plus élevée peut être utilisée.

En variante ou en combinaison, la connexion entre la fibre 30 et le support 10 peut être réalisé à l'aide de moyens mécaniques d'alignement, par exemple en utilisant une gaine enserrant un morceau de la fibre 30 et un morceau du support 10.

Selon une variante de réalisation de l'exemple de procédé décrit précédemment, il est possible d'utiliser une autre technique d'impression en trois dimensions pour le support 10 que la photo-polymérisation à deux photons, en particulier un procédé utilisant une technologie de polymérisation à un seul photon. Ce peut être le cas notamment lorsqu'une résolution très fine n'est pas nécessaire pour réaliser la forme de ce support. Selon une autre variante illustrée sur les figures 7 à 9, on peut réaliser le guide d'onde 15 dans le support 10 possiblement après le ou les étapes de recuits conduisant à une transformation du ou des matériaux en matériau(x) vitreux.

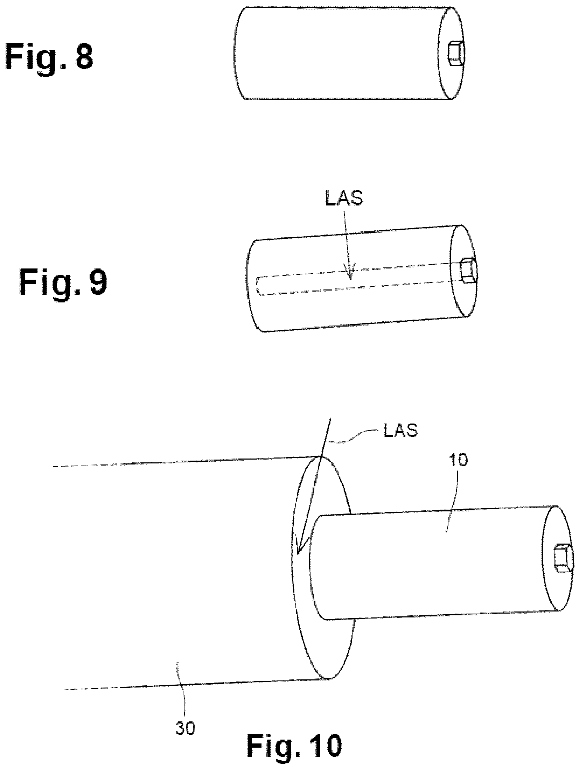

Ainsi après le ou les recuits conduisant au rétreint thermique du support 10 et du composant associé (figures 7 et 8), on expose le support 10 à un laser L, par exemple au laser femto seconde utilisé précédemment. Cela permet d'éviter un éventuel effacement ou une éventuelle détérioration du guide d'onde 15 créé en particulier lorsque la température de recuit de rétreint est trop importante.

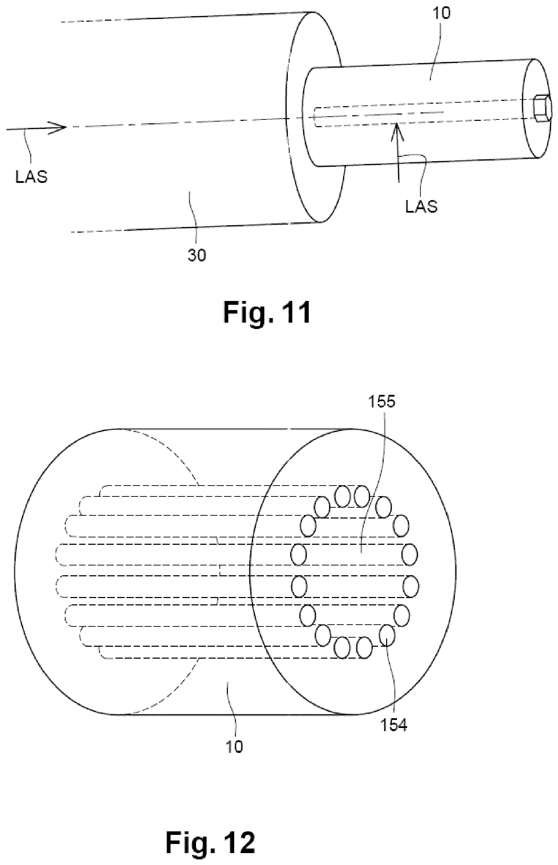

Selon une autre variante illustrée sur les figures 10 et 11, on peut également fabriquer le guide d'onde 15, après que le support 10 ait été assemblé et solidarisé à la fibre optique. Ainsi, dans l'exemple de réalisation illustré sur la figure 10, on effectue une soudure entre la fibre optique 30 et le support 10, par exemple à l'aide d'un laser. Ensuite, dans ce cas, lors de la réalisation du guide d'onde 15, on veille de préférence à maintenir la fibre optique 30 et le support 10 alignés, la libre 30 étant de préférence maintenue tendue entre ses extrémités.

Outre la possibilité de réaliser un guide d'ondes 15 formé dans un volume plein du support 10 et doté d'au moins un canal constitué d'un matériau ayant un indice de optique différent de celui reste du support 10, on peut prévoir de réaliser ce guide d'ondes 15 comme sur la figure 12 sous forme d'une portion 155 entourée de galeries 154 creuses autrement dit de canaux creux vides ou des canaux microstructurés et vides. Dans l'un ou l'autre des modes de réalisation illustrés sur les figures 4, 9, 11, 12, 13, le ou les guides d'ondes réalisés ont une forme rectiligne. Il est en variante possible, comme indiqué précédemment, de former au moins un guide d'onde de forme différente, par exemple de forme courbe ou hélicoïdale, ou bien de réaliser dans le support 10 un ou plusieurs guides d'ondes rectilignes ainsi qu'au moins un guide d'onde 15 d'une autre forme par exemple courbe ou hélicoïdale.

Selon une autre possibilité de réalisation, le support 10 d'accueil de micro/nano composants 21 peut être agencé sur une paroi ou une région latérale 30C d'une fibre.

Dans l'exemple de réalisation illustré sur la figure 16, cette région latérale 30C est la surface externe, courbe, d'une fibre 30 de la forme d'un cylindre de révolution. On peut également prévoir de disposer un tel support 10 sur une région latérale plane d'une fibre 30 de section en forme de « D » ou comportant un méplat ou une zone sensiblement plate et polie localement.

Dans le cas où l'on assemble le support 10 sur une région latérale d'une fibre optique, on privilégie typiquement un procédé de soudage par faisceau laser.

L'assemblage du support 10 piédestal muni d'au moins un composant micro- ou nano-structuré a été décrit dans le cas particulier d'une fibre optique mais peut être réalisé plus généralement sur un guide d'ondes optique voire un autre type de structure telle que par exemple une carte de circuit photonique.

## Revendications

1. Procédé de réalisation d'un dispositif optique muni d'un composant (21) nano-structuré ou micro-structuré assemblé sur une extrémité ou une surface latérale d'un structure (30), en particulier un guide optique ou une fibre optique, le procédé comprenant des étapes consistant à :
- prévoir un support (10) à base d'un premier matériau (12), photosensible et transformable en matériau vitreux, et réaliser sur une première extrémité (10A) dudit support, par photo-polymérisation à plusieurs photons, en particulier à deux photons, un composant (21) micro-structuré ou nano-structuré, à base d'un deuxième matériau (22) photosensible et transformable en matériau vitreux,
- effectuer un ou plusieurs traitements thermiques de sorte à transformer le premier matériau (12) dudit support et le deuxième matériau (22) dudit composant micro- ou nano-structuré en matériau vitreux puis,
- assembler et solidariser, une région d'une deuxième extrémité (10B) dudit support (10) opposée à ladite première extrémité (10A) avec une zone d'une extrémité ou d'une surface latérale de ladite structure (30).

2. Procédé selon la revendication 1, le procédé comprenant en outre : une étape de formation d'au moins un guide d'onde (15) dans un volume dudit support (10).

3. Procédé selon la revendication 2, dans lequel ledit au moins un guide d'onde (15) est réalisé sous forme d'une partie centrale longitudinale entourée de galeries (154) longitudinales formées lors d'une réalisation par fabrication additive dudit support (10).

4. Procédé selon la revendication 2, dans lequel ledit au moins un guide d'onde (15) est formé après réalisation dudit composant (21) sur ledit support (10) et préalablement auxdits un ou plusieurs traitements thermiques.

5. Procédé selon la revendication 2, dans lequel ledit au moins un guide d'onde (15) est formé après lesdits un ou plusieurs traitements thermiques.

6. Procédé selon la revendication 2, dans lequel ledit au moins un guide d'onde (15) est formé après assemblage et solidarisation de ladite région dudit support (10) et de ladite zone de ladite structure (30).

7. Procédé selon l'une des revendications 4 à 6, dans lequel ledit guide d'onde (15) est réalisé par écriture directe au moyen d'un laser dans un volume (152) dudit support (10).

8. Procédé selon l'une des revendications 2 à 7, dans lequel plusieurs guides d'ondes (15A, 15B, 15C) sont formés dans ledit support (10).

9. Procédé selon l'une des revendications 1 à 8, dans lequel le support (10) est réalisé par photo-polymérisation à plusieurs photons, en particulier à deux photons.

10. Procédé selon l'une des revendications 1 à 9, dans lequel ledit premier matériau (12) est identique audit deuxième matériau (22).

11. Procédé selon l'une des revendications 1 à 10, dans lequel ledit premier matériau et/ou ledit deuxième matériau est :
- un composé polymère chargé en particules de matériau vitreux telles que des particules de silice, ou
- un matériau sol-gel.

12. Procédé selon l'une des revendications 1 à 11, dans lequel le support (10) et le composant (21) micro-structuré ou nano-structuré sont formés lors d'une même étape ou bien lors d'étapes successives de fabrication additive, un changement d'objectif optique étant alors opéré entre lesdites étapes successives.

13. Procédé selon l'une des revendications 1 à 12, dans lequel le composant (21) est un composant optique ou photonique, ou un capteur doté d'un composant optique ou photonique, choisi en particulier parmi les composants suivants : un interféromètre, une lentille ou un réseau de lentilles, un ensemble de lentilles de Fresnel, une structure diffractive, un adaptateur de mode, un combineur de faisceaux, une cavité résonnante pour les ondes optiques ou acoustiques.

14. Procédé selon l'une des revendications 1 à 13, dans lequel l'étape consistant à assembler et solidariser la région d'une deuxième extrémité dudit support (10) avec ladite zone est réalisée par fusion localisée de ladite région et de ladite zone, respectivement dudit support (10) et de ladite structure (30).

## Patentansprüche

1. Verfahren zum Herstellen einer optischen Vorrichtung mit einer nano- oder mikrostrukturierten Komponente (21), die an einem Ende oder einer Seitenfläche einer Struktur (30) montiert ist, insbesondere einer optischen Führung oder einer optischen Faser, wobei das Verfahren Schritte umfasst, die aus Folgendem bestehen:
- Vorsehen eines Träger (10) auf Basis eines ersten lichtempfindlichen und in Glasmaterial umwandelbaren Materials (12), und an einem ersten Ende (10A) des Trägers durch Photopolymerisation mit mehreren Photonen, insbesondere mit zwei Photonen, Herstellen einer mikro- oder nanostrukturierten Komponente (21) auf Basis eines zweiten lichtempfindlichen und in Glasmaterial umwandelbaren Materials (22),
- Durchführen einer oder mehrerer Wärmebehandlungen, um das erste Material (12) des Trägers und das zweite Material (22) der mikro- oder nanostrukturierten Komponente in Glasmaterial umzuwandeln, und
- Zusammenfügen und Verbinden einer dem ersten Ende (10A) gegenüberliegenden Region eines zweiten Endes (10B) des Trägers (10) mit einem Bereich eines Endes oder einer Seitenfläche der Struktur (30).

2. Verfahren nach Anspruch 1, wobei das Verfahren weiter Folgendes umfasst: einen Schritt des Bildens mindestens eines Wellenleiters (15) in einem Volumen des Trägers (10).

3. Verfahren nach Anspruch 2, wobei der mindestens eine Wellenleiter (15) in Form eines längsseitigen Mittelteils ausgeführt ist, der von längsseitigen Galerien (154) umgeben ist, die bei einer Herstellung durch additive Fertigung des Trägers (10) gebildet werden.

4. Verfahren nach Anspruch 2, wobei der mindestens eine Wellenleiter (15) nach Herstellung der Komponente (21) auf dem Träger (10) und vor der oder den Wärmebehandlungen gebildet wird.

5. Verfahren nach Anspruch 2, wobei der mindestens eine Wellenleiter (15) nach der einen oder den mehreren Wärmebehandlungen gebildet wird.

6. Verfahren nach Anspruch 2, wobei der mindestens eine Wellenleiter (15) nach dem Zusammenfügen und Verbinden der Region des Trägers (10) und des Bereichs der Struktur (30) gebildet wird.

7. Verfahren nach einem der Ansprüche 4 bis 6, wobei der Wellenleiter (15) durch direktes Beschreiben mittels eines Lasers in einem Volumen (152) des Trägers (10) hergestellt wird.

8. Verfahren nach einem der Ansprüche 2 bis 7, wobei mehrere Wellenleiter (15A, 15B, 15C) in dem Träger (10) ausgebildet sind.

9. Verfahren nach einem der Ansprüche 1 bis 8, wobei der Träger (10) durch Photopolymerisation mit mehreren Photonen, insbesondere mit zwei Photonen, hergestellt ist.

10. Verfahren nach einem der Ansprüche 1 bis 9, wobei das erste Material (12) identisch mit dem zweiten Material (22) ist.

11. Verfahren nach einem der Ansprüche 1 bis 10, wobei das erste Material und/oder das zweite Material Folgendes ist:
- eine Polymerverbindung, die mit Glaspartikeln wie Kieselsäurepartikeln angereichert ist, oder
- ein Boden-Gel-Material.

12. Verfahren nach einem der Ansprüche 1 bis 11, wobei der Träger (10) und die mikro- oder nanostrukturierte Komponente (21) in einem Schritt oder in aufeinanderfolgenden additiven Fertigungsschritten gebildet werden, wobei dann zwischen den aufeinanderfolgenden Schritten ein Wechsel des optischen Objektivs erfolgt.

13. Verfahren nach einem der Ansprüche 1 bis 12, wobei die Komponente (21) eine optische oder photonische Komponente oder ein Sensor ist, der mit einer optischen oder photonischen Komponente ausgestattet ist, insbesondere ausgewählt aus den folgenden Komponenten: ein Interferometer, eine Linse oder ein Linsenarray, eine Fresnel-Linsenanordnung, eine diffraktive Struktur, ein Modenadapter, ein Strahlkombinator, ein Resonanzhohlraum für optische oder akustische Wellen.

14. Verfahren nach einem der Ansprüche 1 bis 13, wobei der Schritt, der darin besteht, die Region eines zweiten Endes des Trägers (10) mit dem Bereich zusammenzufügen und zu verbinden, durch lokalisiertes Verschmelzen der Region und des Bereichs bzw. des Trägers (10) und der Struktur (30) erfolgt.

## Claims

1. A method for making an optical device provided with a nano-structured or micro-structured component (21) assembled on one end or a lateral surface of a structure (30), in particular an optical guide or an optical fibre, the process comprising the steps of:
- providing a carrier (10) based on a first material (12), photosensitive and transformable into a vitreous material, and making on a first end (10A) of said carrier, by multi-photon, in particular two-photon, photopolymerisation, a micro-structured or nano-structured component (21), based on a second material (22) photosensitive and transformable into a vitreous material,
- performing one or more heat treatment(s) so as to transform the first material (12) of said carrier and the second material (22) of said micro- or nano-structured component into a vitreous material and then,
- assembling and securing a region of a second end (10B) of said carrier (10) opposite to said first end (10A) with an area of one end or a lateral surface of said structure (30).

2. The method according to claim 1, the process further comprising: a step of forming at least one waveguide (15) in a volume of said carrier (10).

3. The method according to claim 2, wherein said at least one waveguide (15) is made in the form of a longitudinal central portion surrounded by longitudinal galleries (154) formed when making said carrier (10) by additive manufacturing.

4. The method according to claim 2, wherein said at least one waveguide (15) is formed after making said component (21) on said carrier (10) and prior to said one or more heat treatment(s).

5. The method according to claim 2, wherein said at least one waveguide (15) is formed after said one or more heat treatment(s).

6. The method according to claim 2, wherein said at least one waveguide (15) is formed after assembling and securing said region of said carrier (10) and said area of said structure (30).

7. The method according to one of claims 4 to 6, wherein said waveguide (15) is made by direct writing by means of a laser in a volume (152) of said carrier (10).

8. The method according to one of claims 2 to 7, wherein several waveguides (15A, 15B, 15C) are formed in said carrier (10).

9. The method according to one of claims 1 to 8, wherein the carrier (10) is made by multi-photon, in particular two-photon, photopolymerisation.

10. The method according to one of claims 1 to 9, wherein said first material (12) is identical to said second material (22).

11. The method according to one of claims 1 to 10, wherein said first material and/or said second material is:
- a polymer compound filled with particles of a vitreous material such as silica particles, or
- a sol-gel material.

12. The method according to one of claims 1 to 11, wherein the carrier (10) and the micro-structured or nano-structured component (21) are formed in the same step or in successive additive manufacturing steps, an optical objective change being then performed between said successive steps.

13. The method according to one of claims 1 to 12, wherein the component (21) is an optical or photonic component, or a sensor fitted with an optical or photonic component, selected in particular from among the following components: an interferometer, a lens or a lens array, a set of Fresnel lens, a diffractive structure, a mode adapter, a beam combiner, a resonant cavity for optical or acoustic waves.

14. The method according to one of claims 1 to 13, wherein the step of assembling and securing the region of a second end of said carrier (10) with said area is carried out by localised fusion of said region and said area, respectively of said carrier (10) and said structure (30).
